# FASCICULE DE BREVET EUROPEEN

(11) **EP 2 958 827 B1**
(45) Date de publication et mention de la délivrance du brevet: **07.12.2016**
(21) Numéro de dépôt: 14701748.7
(22) Date de dépôt: 28.01.2014
(51) Int. Cl.: B65D 83/00

(54) **DISTRIBUTEUR DE SAUCE ET CONDIMENTS**
SOSSEN- UND GEWÜRZSPENDER
SAUCE AND CONDIMENT DISPENSER

(30) Priorité: 19.02.2013 FR 1300360
(43) Date de publication de la demande: 30.12.2015
(73) Titulaire: Caunant, Nicolas, 27930 Cierrey (FR)
(72) Inventeur: Caunant, Nicolas, 27930 Cierrey (FR)
(74) Mandataire: Casalonga
(86) Numéro de dépôt international: PCT/EP2014/051583
(87) Numéro de publication internationale: WO 2014/127957

(56) Documents cités:
- EP-A1- 1 284 163
- EP-A2- 0 319 861

## Description

La présente invention concerne un distributeur de sauce et condiments et notamment un emballage permettant de protéger, conditionner, stocker, transporter et distribuer des sauces et condiments de types visqueux et/ou pâteux, au moyen d'un mécanisme pistolet-doseur.

L'emballage et le conditionnement des produits visqueux et pâteux, de type moutarde, ketchup, mayonnaise, pâte à tartiner et tous produits similaires, sont couramment utilisés en restauration rapide. Afin d'anticiper les fortes demandes en sauce dans les cuisines des restaurations rapides, ces produits sont couramment emballés et conditionnés en cartouches et distribués au moyen d'un système mécanique de type pistolet-doseur. Ces pistolets sont de même principe que les pistolets à mastic. Un exemple de ce type de pistolet doseur peut être trouvé sous le brevet US 4,830,231. Bien que ces emballages et conditionnements aient été efficaces, ils présentent quelques inconvénients.

Il est recommandé d'éliminer ou de réduire la consommation d'emballages n'ayant pas une valeur ajoutée au produit ou à l'utilisateur. Même une infime quantité d'emballage éliminé peut apporter un effet non négligeable sur l'environnement et une importante réduction des coûts d'emballage par le biais des quantités très importantes de produit consommées et utilisées par l'industrie agro-alimentaire et le secteur de la restauration rapide. Cependant, afin d'éliminer ces matériaux sans valeur ajoutée et conserver la fonctionnalité de l'ensemble, il est nécessaire d'étudier et de comprendre la fonction de chaque élément composant la fonction de distributeur de sauce afin de proposer un concept alternatif aux solutions actuellement disponibles sur le marché. Les cartouches de sauce actuellement disponibles sur le secteur de la restauration rapide sont de construction papier formant un tube, ayant une fonction d'enceinte dans laquelle le produit est emballé, conditionné, protégé, transporté, stocké ; et ayant deux extrémités, l'une ayant une fonction de piston et ainsi pousser le produit au travers de la seconde disposant d'un système de valve, qui aura la fonction de distribution. Ces cartouches de sauce font également intervenir de nombreux types de matériaux, papier, plastique, colle thermo fusible, représentant une quantité très importante d'emballages pour chaque cartouche qui, après avoir été consommés et utilisés en cuisine, doivent être éliminés, ce qui représente, suivant ces mêmes quantités de produits consommés et utilisés dans le secteur agro-alimentaire et le secteur de la restauration rapide, une quantité astronomique d'emballages à éliminer tant en poids qu'en volume. Ce type de cartouche peut être trouvé sous le numéro de publication international WO 2009/023375 (A2) - Données bibliographiques : EP 2185445 (A1). Il est nécessaire de revoir et retravailler ces emballages afin de proposer un nouveau distributeur de sauce, et ainsi retravailler ces fonctions et pouvoir réutiliser ce qui peut être réutilisable à chaque nouvel emballage, et proposer un nouveau concept distributeur de sauce amélioré et optimisé. Il est également nécessaire d'améliorer et d'optimiser la consommation d'emballage, mais également les moyens et les coûts de production associés à ces mêmes emballages.

On pourra également se référer au document EP-A2-0 319 861.

L'invention a pour objet un dispositif d'emballage et de distribution de sauce et condiments visqueux et/ou pâteux. Le dispositif d'emballage et de distribution se compose d'un sachet en film flexible de type film plastique, contenant le produit à distribuer, et permettant de protéger, stocker et transporter le produit jusqu'à son lieu final d'utilisation ou il permettra de distribuer son contenu. Ce sachet est de type « Doypack » en termes anglo-saxon, c'est-à-dire ayant une conformation dite en « W », de manière à obtenir un fond plat par lequel le produit va être distribué. Ce fond plat est muni de fines découpes dans le matériau faisant office de valve, permettant ainsi la distribution du produit. Un opercule amovible peut recouvrir ces valves, ce qui les protégera et protégera le produit depuis sa fabrication jusqu'à son lieu d'utilisation. Cet opercule aura également une fonction de témoin d'inviolabilité.

Afin de permettre la distribution, le dispositif d'emballage nécessite une enceinte qui sera généralement de forme cylindrique et qui peut être réutilisée. Cette enceinte se compose de deux extrémités, l'une recevant un piston et l'autre le sachet fond plat. Le piston sera utilisé afin d'appliquer une force sur le sachet et d'expulser le produit qu'il contient au travers des valves sur le fond plat du sachet. Ce piston pourra être réutilisé comme l'enceinte. Le sachet à fond plat est inséré dans cette enceinte par l'autre extrémité, ayant pour position finale le fond plat obstruant l'autre extrémité, avec des découpes dans le fond du sachet plat pour distribuer le produit. Dans le cas où un renforcement du fond du sachet plat soit nécessaire, par exemple pour éviter que le fond du sachet plat se déforme sous l'effet de la force exercée par le piston lors des opérations de distribution, un renfort sur cette face peut être effectué par le biais d'un disque qui peut être en matériau plastique semi-rigide ou rigide et qui peut être assemblé sur le pistolet doseur ou directement soudé sur le fond du sachet. L'opercule peut avoir une partie repliée sur elle-même, permettant un pelage plus simple et ergonomique par l'utilisateur final.

D'autres buts, caractéristiques et avantages de l'invention apparaîtront à la lecture de la description suivante, donnée uniquement à titre d'exemple non limitatif, et faite en référence aux dessins annexés sur lesquels :

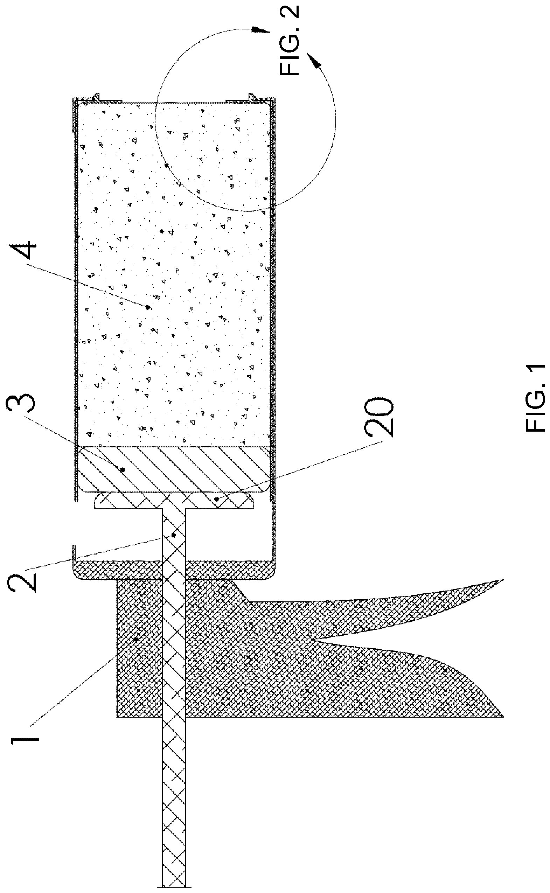

- la Figure 1 représente une vue en coupe d'un dispositif d'emballage et de distribution de sauce et condiment, monté dans un pistolet-doseur, selon la présente invention ;
- la Figure 2 est un agrandissement de la zone de distribution, une fois l'ensemble des éléments servant la fonction de distribution montés dans le pistolet-doseur;
- la Figure 3 est une vue éclatée de l'assemblage piston, cylindre, sachet et renfort ;
- la Figure 4 montre la déformation des parois latérales du sachet à fond plat, une fois soumises à une pression par le piston ;
- la Figure 5 présente le sachet à fond plat et sa zone de distribution contenant valves et opercule, selon la présente invention ;
- la Figure 6 présente un exemple de ligne de conditionnement partant d'une bobine de film flexible, selon la présente invention ; et
- la Figure 7 présente un agrandissement de la zone de distribution, selon un autre mode de réalisation de l'invention.

La désignation 1 se réfère généralement à un ensemble pistolet-doseur utilisé pour distribuer et doser tout type de produit pâteux et/ou visqueux 4 comme du ketchup, de la moutarde, de la mayonnaise, de la pâte à tartiner et/ou tous produits similaires. Ce type de produit pâteux et/ou visqueux 4 peut être fabriqué à base d'eau et/ou d'huile. Tel qu'illustré, le pistolet-doseur 1 est muni d'un système de gâchette permettant d'actionner et de mouvoir un axe 2 qui, en son extrémité 20, possède une surface suffisante pour exercer une force sur le piston 3, ce qui mettra le sachet à fond plat 9 sous pression dans une enceinte 5 et expulsera son contenu 4 au travers de la surface d'échange 17 contenant une ou plusieurs ouvertures 7. Pendant l'opération de dosage, le piston 3 va se mouvoir en direction de la surface d'échange 17. Cet axe 2 peut être actionné de manière manuelle à l'aide d'un système de gâchette ou peut être semi-automatique et/ou automatique par le biais d'un moteur alimenté en énergie électrique ou pneumatique.

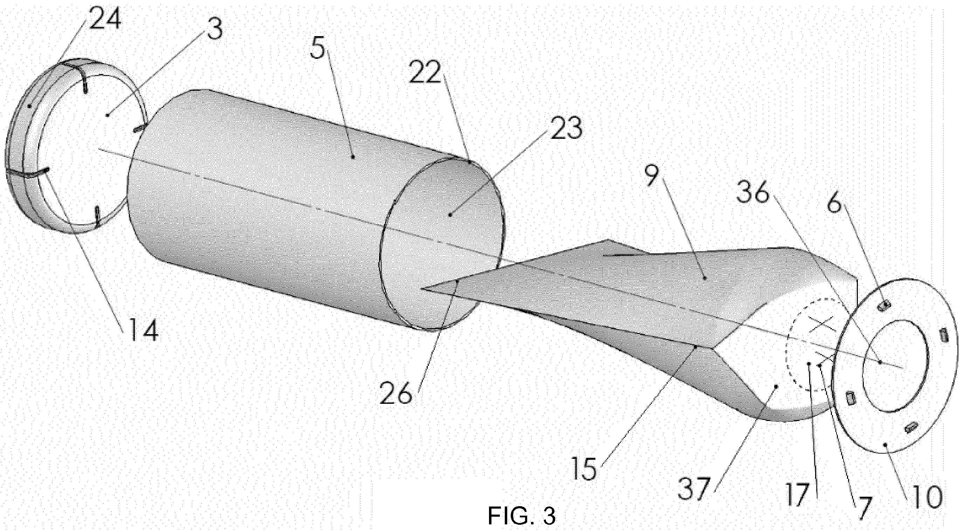

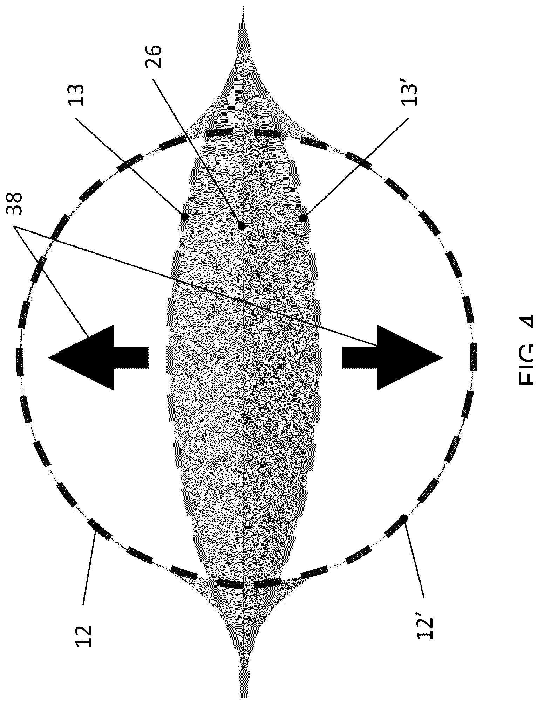

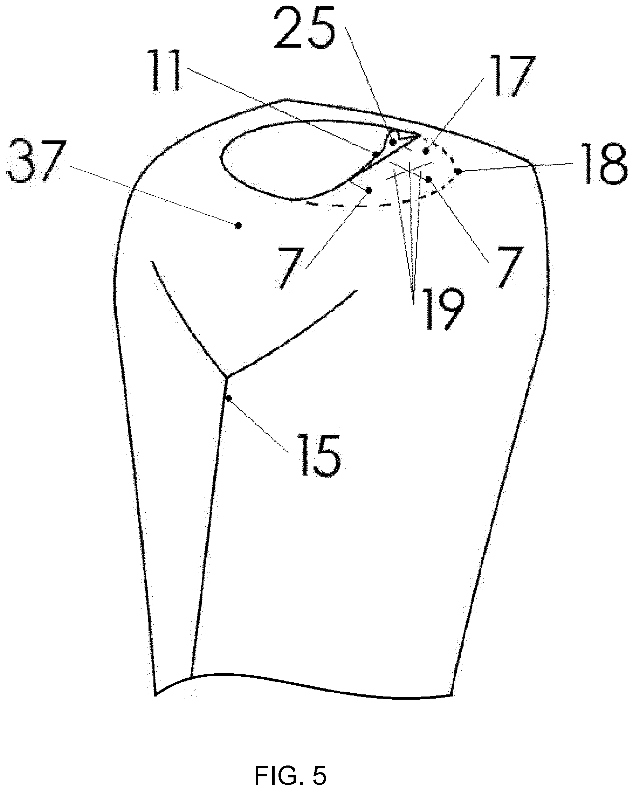

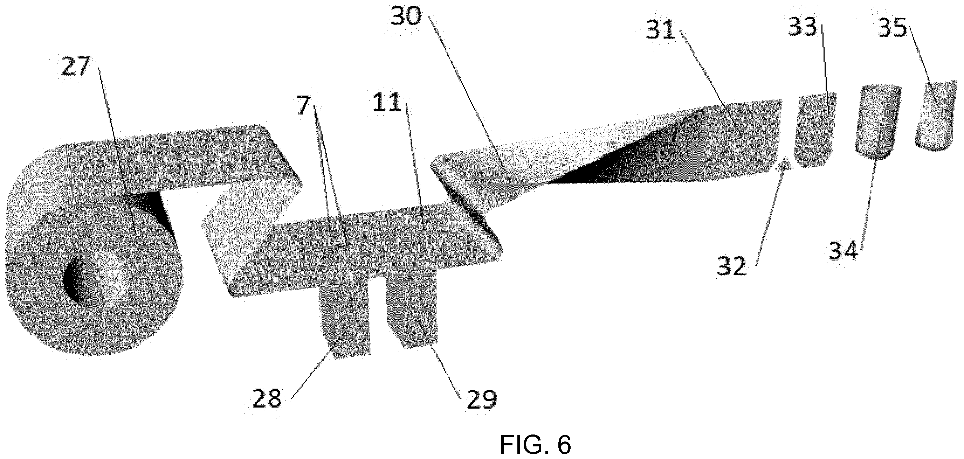

Le sachet à fond plat identifié 9 est constitué de trois éléments ou surfaces, la face avant 13, la face arrière 13' comme le montre la figure 4, et la base du sachet à fond plat identifiée 37 comme le montrent la figure 5 et la figure 3. La base 37 du sachet à fond plat 9 est obtenue par un pliage en W lorsque ce dernier est mis en forme, suivant la représentation 30 de la figure 6, qui une fois formé et debout, permet d'avoir, en fonction des angles choisis pour les soudures latérales 15, une surface plane de manière partielle ou totale. Les soudures latérales référencées 15 sur les figures 3 et 5 montrent le profil de ce pliage en W. Cette base 37 du sachet à fond plat va contenir la surface d'échange 17, ladite surface n'étant qu'une zone spécifique de la surface totale du fond 37, ayant pour fonction de distribuer le produit 4 que l'emballage contient.

La soudure supérieure identifiée 26 permet de sceller et fermer le sachet 9 une fois ce dernier rempli de son contenant 4. Cette soudure peut être de forme linéaire comme représentée dans la figure 3, matérialisation physique de la présente invention, mais peut également être de forme circulaire. C'est également le même matériau qui constitue ces trois éléments, provenant de la même feuille ou de la même bobine 27 tel qu'illustré sur la figure 6. Généralement constitué d'un matériau flexible souple, dont la structure, qui peut être un simple PEBD mais qui en fonction des besoins en termes de protection et de perméabilité peut nécessiter un matériau multicouche, assure l'intégrité de son contenu.

Les dimensions du sachet à fond plat 9 sont étroitement liées aux accessoires servant la fonction de distribution, faisant référence ici au tube 5 et au piston 3. Suivant le diamètre intérieur du tube 5 et intrinsèquement de son piston 3, la largeur du sachet à fond plat, en l'occurrence la longueur de la soudure 26 qui est parfaitement parallèle à la base du sachet à fond plat, doit correspondre à la moitié de la valeur du périmètre intérieur de ce tube identifié 5.

La figure 4 illustre schématiquement deux états possibles du sachet à fond plat, les faces avant et arrière du sachet formé mais non soumis à la pression du piston 3 dans le tube 5 prennent les positions référencées 13 et 13'. Une fois le sachet à fond plat positionné dans son tube 5, le piston 3 va mettre ledit sachet et son contenu sous-pression lors de son déplacement en direction de l'extrémité opposée, c'est-à-dire la surface d'échange 17. Une fois le sachet soumis à la pression du piston 3, les faces avant et arrière vont se déformer sous l'action du piston 3 et vont épouser parfaitement le périmètre intérieur du tube identifié 5. Cette nouvelle configuration est également identifiée sur la figure 4 sous les positions référencées 12 et 12', les flèches 38 symbolisant le déplacement de ces faces une fois soumises à l'action du piston 3. Ces faces 12 et 12' vont donc venir en contact et vont parfaitement épouser la surface interne 23 du tube 5. La hauteur de ce sachet à fond plat 9 sera ajustée en fonction de la quantité de produit 4 souhaitée dans cet emballage et dans la limite de celle que le tube 5 peut contenir.

Le matériau constituant le sachet 9 doit être suffisamment souple pour pouvoir se déformer sous l'action du piston 3 tout en étant suffisamment solide pour ne pas rompre sous l'action de ce même piston 3.

L'enceinte sera matérialisée par un tube identifié 5 sur la figure 3, et peut être de nature plastique, qui se matérialisera sous la forme d'un PEBD afin de remplir les fonctions techniques associées à son utilisation comme la légèreté, le nettoyage facile, l'assemblage facile avec le piston 3 ainsi qu'avec le corps du pistolet-doseur 1, mais également aux contraintes liées aux coûts d'emballage. Ce tube 5 a pour principe d'être ou de pouvoir être réutilisé jusqu'à ce qu'il ne puisse plus assurer les fonctions pour lesquelles il a été développé, cela a pour objectif de réduire la consommation d'emballage utilisé dans l'industrie agro-alimentaire et de la restauration rapide. L'épaisseur de ce tube 5 doit être suffisante pour supporter la pression du sachet à fond plat 9 et de son contenu 4 soumis par le piston 3 lors de son utilisation. Ce tube 5 sera muni de deux extrémités parfaitement symétriques, l'une obstruée par le piston 3 et de l'autre le sachet à fond plat 9, la surface de distribution 17 obstruant l'autre extrémité. Il sera également préférable que la section de ce tube 5 soit de forme circulaire afin d'avoir une égale répartition des forces internes lorsque le piston mettra sous pression le sachet à fond plat 9 et intrinsèquement son produit 4.

Le piston 3 aura la même section que le tube 5. Il pourra également être de nature plastique, qui se matérialisera sous la forme d'un Polypropylène afin de remplir les fonctions techniques associées à ses sollicitations comme la résistance aux frottements entre la surface interne du tube identifiée 23 et la surface du piston référencée 24 sur la figure 3. Lors de l'opération de dosage, le piston 3 sera en mouvement le long du tube 5 en direction de la surface d'échange 17. Lors de cette même opération de dosage, les plis du sachet à fond plat autour de la zone 26 peuvent nécessiter de laisser passer l'air pouvant être emprisonné dans l'enceinte du tube 5. Tel qu'illustré, des ouvertures, matérialisées sous la forme de rainures 14 peuvent être faites sur le piston 3 en quatre angles, mais cette fonction peut également être effectuée par de simples perçages débouchant sur cette même face 3. Les deux surfaces opposées de ce piston référencé 3 sont parfaitement identiques, ce qui permettra d'exploiter les deux côtés de ce piston lors des opérations de dosage.

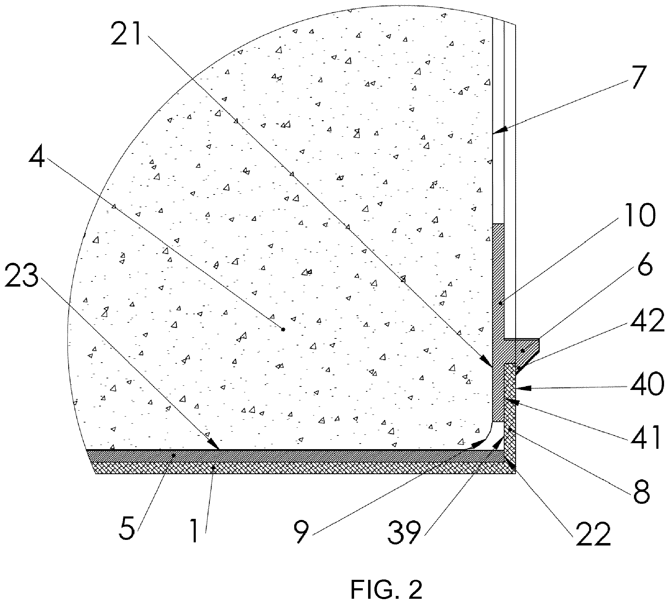

C'est au travers de la surface d'échange 17 située sur la base 37 du sachet à fond plat 9 que le produit 4 va être expulsé. C'est sur cette zone 17 qu'une ou plusieurs ouvertures 7 seront présentes pour effectuer le dosage du produit, et se matérialiseront sous la forme de découpes dans le matériau, et peuvent prendre la forme d'une croix pour chaque ouverture. Lorsque le sachet à fond plat 9 sera mis sous pression dans son tube 5, les volets 19 formés par la croix vont se déformer sous la pression permettant ainsi au produit 4 de s'échapper par ces ouvertures 7. Lorsque la pression n'est plus exercée sur le sachet à fond plat 9, les volets 19 reviennent en position fermée ou partiellement fermée. De préférence, la surface 17 peut prendre une forme circulaire comme le montre la figure 5 qui, une fois le sachet 9 monté dans son enceinte 5, aura le même axe 36 avec le tube 5, le piston 3 et un renfort 10 comme le présente la figure 3, et permettra ainsi une distribution optimale. Lors de son utilisation dans le pistolet-doseur 1, le bord 22 viendra en contact avec la face interne 39 du bord 8 comme présenté dans la figure 2.

Un opercule pelable 11 sera nécessaire pour assurer l'intégrité du produit 4 depuis son conditionnement, pendant son stockage et son transport jusqu'à son lieu final d'utilisation. Cet opercule couvrira la surface d'échange 17 afin de rendre l'emballage hermétique par rapport aux ouvertures 7 faites dans le film flexible sur la base 37 du sachet à fond plat 9. Cet opercule 11 peut être matérialisé par une forme circulaire comme le présentent les figures 5 et 3, et peut être assemblé avec le sachet par soudure thermique - cette soudure est symbolisée par la ligne pointillée 18 permettant également de définir les limites de la surface d'échange 17. Cette soudure doit être suffisante pour assurer l'étanchéité, mais doit également être suffisamment résistante pour ne pas céder sous la pression de son contenu lors des opérations de stockage et de transport. Cet opercule doit être pelable, il doit pouvoir être retiré aisément sur le lieu final par l'utilisateur sans endommager la surface d'échange 17. Cette soudure servira de témoin d'inviolabilité et permettra de garantir l'intégrité de son contenu.

Afin de permettre une préhension facile dudit opercule 11, une languette ou ouverture facile 25 pourra être utilisée pour permettre d'aider l'utilisateur final à retirer cette dernière sans avoir recours à un outil pouvant endommager l'emballage. Le matériau de l'opercule peut être de nature multicouche afin d'allier les fonctions nécessaires comme la pelabilité, matérialisé par un PE pelable, à un PET métallisé pour les besoins de perméabilité du complexe multicouche.

Lors de l'opération de dosage du produit 4, il se peut que la surface d'échange 17 se déforme trop sous l'action du piston 3, ce qui peut amener le sachet à fond plat 9 à être expulsé du corps du pistolet doseur 1, malgré les bords 8 du pistolet-doseur illustrés sur la figure 2 ayant pour fonction de contenir et/ou retenir l'emballage sous l'action de l'axe 2 et intrinsèquement du piston 3 lors des opérations de distribution. Afin de pallier cet effet non souhaité, un accessoire supplémentaire peut être ajouté à cet assemblage ; un renfort 10 peut être installé sur le pistolet-doseur 1 afin de rigidifier la face d'échange 17 et d'étendre la fonction des bords identifiés 8 en augmentant la surface de contact entre la surface 39 et le fond du sachet plat 37 dans le but de retenir le sachet à fond plat 9 dans sa position optimale d'utilisation. Le renfort 10 permet de rigidifier la surface d'échange 17 une fois l'ensemble formé par le tube 5, le piston 3 et le sachet à fond plat 9, assemblé dans le pistolet-doseur 1. Ce renfort 10 peut être de nature plastique, de type Polypropylène dans une matérialisation physique de la présente invention. La forme de ce renfort 10 sera la même que la section du tube 5, c'est à dire circulaire. Afin de répondre à sa fonction première, ce renfort 10 aura une face interne 21, une face externe 41 et un système de verrouillage 6. La surface intérieure 21 sera en contact avec le fond du sachet plat 37 d'une manière suffisante pour retenir le sachet à fond plat 9 lors des opérations de distribution comme le montre la figure 2, sans pour autant gêner la distribution du produit au travers ses ouvertures 7 et/ou même occulter la surface de distribution 17.

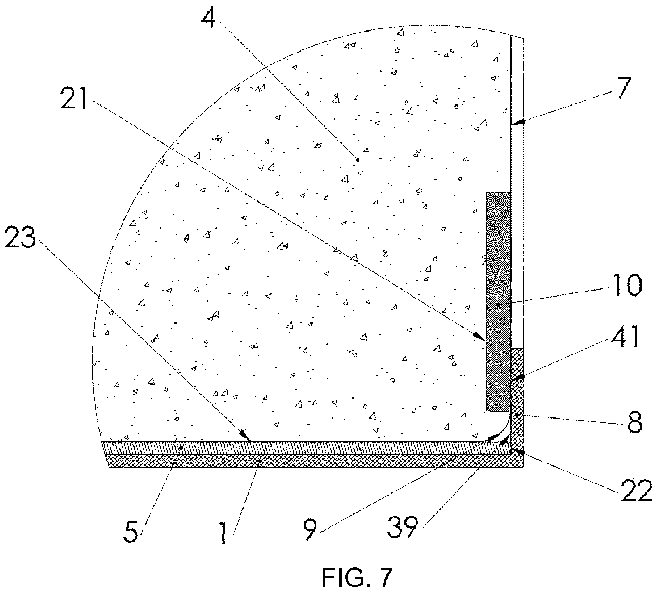

Tel qu'illustré sur la figure 2, des crochets identifiés 6 permettent de verrouiller/fixer ce renfort 10 sur le bâti du pistolet doseur 1 au niveau de ses bords 8. Ces crochets 6 sont munis d'ardillons 42 venant en contact sur la face externe 40 des bords 8, permettant de garder la surface externe 41 du renfort 10 en contact avec la face intérieure 39 des bords 8 lors de ses multiples sollicitations, mais permettra également de pouvoir les séparer et/ou démonter lors des opérations de nettoyage par exemple. Ce renfort 10 a pour principe d'être ou de pouvoir être réutilisé jusqu'à ce qu'il ne puisse plus assurer les fonctions pour lesquelles il a été développé, cela a pour objectif de réduire la consommation d'emballage utilisé dans l'industrie agro-alimentaire et de la restauration rapide. Cette option a été choisie dans un but économique et écologique. Cependant, tel qu'illustré sur la figure 7, il se peut que ce renfort 10 soit soudé, via sa face externe 41 au sachet à fond plat au niveau de sa base 37 ou de sa surface de distribution 17, la soudure étant le moyen d'assembler et de verrouiller ces deux éléments entre eux. Cette solution impose que chaque emballage dispose de son renfort, et ne pourra être dissocié de ce dernier.

Lors de la mise en oeuvre et du montage dans le pistolet doseur, l'ensemble prendra la forme suivant la figure 3, et peut suivre la procédure de manipulation et de montage ci-après : verrouiller le renfort 10 sur les bords 8 du pistolet-doseur 1 si le renfort est nécessaire, prendre le tube 5 et y insérer d'un côté le piston 3, de l'autre y introduire le sachet 9 avec la face de distribution 17 occultant l'autre extrémité, puis une fois le piston 3, le tube 5 et le sachet 9 assemblés, le pistolet doseur 1 ayant son axe 2 rentré à son maximum afin de pouvoir y insérer l'assemblage piston/tube/sachet. Une fois l'assemblage piston/tube/sachet inséré, l'axe 2 sera avancé jusqu'à ce que son embout 20 soit en contact avec le piston 3. Le pistolet doseur est prêt à l'emploi. Une fois le sachet vidé de son contenant, le piston aura une position très proche de l'extrémité opposée à sa position originelle, soit très proche du bord 8, n'ayant qu'entre ces deux éléments un sachet 9 vidé et compressé entre ces deux surfaces. Afin d'optimiser l'efficacité en restaurant, le concept permet d'exploiter ce tube 5 et son piston 3 dans les deux sens, c'est-à-dire qu'il ne sera pas nécessaire de replacer le piston dans sa position originelle, il suffira simplement de retourner l'ensemble afin d'exploiter l'autre côté en y insérant un nouveau sachet du côté disponible.

D'un point de vue industriel, et suivant la figure 6, le sachet à fond plat 9 peut être formé, rempli et soudé sur une ligne de conditionnement semi-automatisée ou automatisée de type FFS dit « Form Fill Seal » partant d'une bobine de film flexible. Sur cette même figure, l'élément 28 représente l'outil permettant la découpe de ces ouvertures 7 dans la surface 17, l'élément 29 représente l'outil permettant l'operculage de l'élément 11. Tel qu'illustré, la ou les découpes afin de réaliser la ou les ouvertures 7 sur la surface d'échange 17 ainsi que l'opération d'operculage de ces mêmes surfaces devront être effectuées avant les opérations de mise en forme, de remplissage et de soudure du sachet 9.

Ces opérations seront matérialisées par l'élément 30, symbolisant la création et la mise en forme du fond plat dans la conformation dite en « W », l'élément 31 symbolisant la configuration dite « à plat » du sachet 9, l'élément 33 représentant le sachet à fond plat découpé et soudé sur ses cotés latéraux 15, pouvant faire apparaître des éjections 32 suivant le profil de soudure sélectionné, l'élément 34 symbolisant l'opération de remplissage, et l'élément 35 symbolisant le sachet soudé sur la partie supérieure et prêt à être expédié sur le lieu final d'utilisation. Ce type d'emballage peut également être performé, c'est à dire qu'il sera vendu ou expédié vide et à plat, symbolisé par l'élément (33) sur la fig.6 ; disposant déjà de ces découpes 7, de l'opercule 11 ainsi que des deux soudures latérales 15, puis ces emballages vides seront expédiés ou vendus à un autre industriel utilisant du matériel de type FS dit « Fill Seal », ne laissant qu'à ce dernier l'opération de remplissage et de soudure supérieure 26 pour obtenir le sachet fini et prêt à l'emploi. Cette solution est souvent retenue afin de répondre à des besoins en termes de coûts, de flexibilité, de contraintes industrielles comme l'espace disponible ou des contraintes commerciales comme des quantités annuelles faibles ou des productions dites de petites séries.

## Revendications

1. Dispositif pour emballer et distribuer tout type de sauce et condiment visqueux et/ou pâteux comportant :
- un tube réutilisable (5), généralement de forme cylindrique, ayant deux extrémités parfaitement similaires, et
- un piston réutilisable (3) présentant le même profil que ledit tube (5), ayant ses deux faces parfaitement similaires et positionné dans ledit tube (5) par l'une de ses extrémités, **caractérisé en ce qu'**il comprend :
- un sachet (9) à fond plat positionné dans ledit tube (5) par l'autre extrémité, ayant deux soudures latérales (15) et une base (37) ayant une surface partiellement ou totalement plane (37) et une surface d'échange (17) disposant d'au moins une ouverture (7) de distribution du produit (4), et
- un opercule (11) assemblé au sachet (9) recouvrant ladite surface (17) et disposant d'une languette (25).

2. Dispositif selon la revendication 1, **caractérisé en ce que** les deux soudures latérales (15) du sachet à fond plat (9) ont une conformation en « W », permettant d'obtenir un fond partiellement ou totalement plat (37).

3. Dispositif selon la revendication 1, **caractérisé en ce que** le sachet à fond plat (9) est construit dans un film flexible.

4. Dispositif selon la revendication 3, dans lequel le film flexible provient d'une bobine (27).

5. Dispositif selon la revendication 1, **caractérisé en ce que** la surface d'échange (17) fait partie intégrante du sachet (9) et est située sur le fond partiellement ou totalement plat (37).

6. Dispositif selon la revendication 5, **caractérisé en ce que** ladite surface d'échange (17) dispose d'une pluralité de volets (19) formant au minimum une ouverture (7) permettant de distribuer le produit (4).

7. Dispositif selon la revendication 1, **caractérisé en ce qu'**il comprend un renfort (10) apte à rigidifier la surface d'échange (17) une fois l'ensemble formé par le tube (5), le piston (3) et le sachet à fond plat (9), assemblé dans le pistolet-doseur (1).

8. Dispositif selon la revendication 1, **caractérisé en ce que** le sachet à fond plat (9) présente deux surfaces latérales (12, 12') épousant parfaitement la surface intérieure (23) du tube (5), lorsque le sachet à fond plat (9) est mis sous pression par le piston (3).

9. Dispositif selon la revendication 1, **caractérisé en ce que** la surface (37) dispose d'un revêtement thermo-fusible permettant d'assembler et de souder l'opercule (11) suivant une ligne de soudure (18).

10. Dispositif selon la revendication 1, **caractérisé en ce que** le piston (3) dispose d'ouvertures (14).

11. Dispositif selon la revendication 7, **caractérisé en ce que** le renfort (10) est assemblé au corps du pistolet-doseur (1) ou au fond du sachet plat (9) au niveau de sa base (37).

12. Procédé de fabrication du dispositif pour emballer et distribuer tout type de sauce et condiment visqueux et/ou pâteux selon l'une quelconque des revendications 1 à 11, **caractérisé en ce qu'**il comprend :
- une étape de découpe desdites ouvertures (7),
- une étape d'operculage de la surface d'échange (17) par son opercule (11),
- une étape de conformation (30) du sachet en «W »,
- une étape de mise à plat (31) du sachet (9),
- une étape de soudure (33) des côtés latéraux du sachet,
- une étape de remplissage (34), et
- une étape de soudure (35) de la partie supérieure du sachet à fond plat (9).

## Patentansprüche

1. Vorrichtung zur Verpackung und Ausgabe jeder Art von Sauce und viskosem und/oder pastösem Gewürz, die aufweist:
- ein wiederverwendbares Rohr (5), allgemein von zylindrischer Form, das zwei perfekt gleiche Enden hat, und
- einen wiederverwendbaren Kolben (3), der das gleiche Profil wie das Rohr (5) aufweist, dessen zwei Seiten perfekt gleich sind und der über eines seiner Enden im Rohr (5) positioniert ist,
**dadurch gekennzeichnet, dass** sie enthält:
- einen Beutel (9) mit flachem Boden, der im Rohr (5) über das andere Ende positioniert wird, der zwei seitliche Schweißungen (15) und eine Basis (37) hat, die eine im Wesentlichen oder vollständig ebene Fläche (37) und eine Austauschfläche (17) hat, die über mindestens eine Ausgabeöffnung (7) für das Produkt (4) verfügt, und
- eine mit dem Beutel (9) zusammengefügte Abdeckfolie (11), die die Fläche (17) bedeckt und über eine Zunge (25) verfügt.

2. Vorrichtung nach Anspruch 1, **dadurch gekennzeichnet, dass** die zwei seitlichen Schweißungen (15) des Beutels mit flachem Boden (9) eine « W »-förmige Gestaltung haben, die es ermöglicht, einen teilweise oder vollständig flachen Boden (37) zu erhalten.

3. Vorrichtung nach Anspruch 1, **dadurch gekennzeichnet, dass** der Beutel mit flachem Boden (9) aus einer elastischen Folie aufgebaut ist.

4. Vorrichtung nach Anspruch 3, wobei die elastische Folie von einer Spule (27) kommt.

5. Vorrichtung nach Anspruch 1, **dadurch gekennzeichnet, dass** die Austauschfläche (17) integrierender Bestandteil des Beutels (9) ist und sich auf dem teilweise oder vollständig flachen Boden (37) befindet.

6. Vorrichtung nach Anspruch 5, **dadurch gekennzeichnet, dass** die Austauschfläche (17) über eine Vielzahl von Klappen (19) verfügt, die mindestens eine Öffnung (7) bilden, die die Ausgabe des Produkts (4) ermöglicht.

7. Vorrichtung nach Anspruch 1, **dadurch gekennzeichnet, dass** sie eine Verstärkung (10) enthält, die die Austauschfläche (17) versteifen kann, wenn die aus dem Rohr (5), dem Kolben (3) und dem Beutel mit flachem Boden (9) gebildete Einheit in der Dosierpistole (1) zusammengefügt ist.

8. Vorrichtung nach Anspruch 1, **dadurch gekennzeichnet, dass** der Beutel mit flachem Boden (9) zwei Seitenflächen (12, 12') aufweist, die sich perfekt an die Innenfläche (23) des Rohrs (5) anpassen, wenn der Beutel mit flachem Boden (9) durch den Kolben (3) unter Druck gesetzt wird.

9. Vorrichtung nach Anspruch 1, **dadurch gekennzeichnet, dass** die Fläche (37) über eine wärmeschmelzbare Beschichtung verfügt, die es ermöglicht, die Abdeckfolie (11) gemäß einer Schweißnaht (18) anzufügen und zu schweißen.

10. Vorrichtung nach Anspruch 1, **dadurch gekennzeichnet, dass** der Kolben (3) über Öffnungen (14) verfügt.

11. Vorrichtung nach Anspruch 7, **dadurch gekennzeichnet, dass** die Verstärkung (10) mit dem Körper der Dosierpistole (1) oder dem Boden des flachen Beutels (9) im Bereich seiner Basis (37) zusammengefügt wird.

12. Verfahren zur Herstellung einer Vorrichtung zur Verpackung und Ausgabe jeder Art von Sauce und viskosem und/oder pastösem Gewürz nach einem der Ansprüche 1 bis 11, **dadurch gekennzeichnet, dass** es enthält:
- einen Schritt des Ausschneidens der Öffnungen (7),
- einen Schritt des Abdeckens der Austauschfläche (17) durch ihre Abdeckfolie (11),
- einen Schritt der Gestaltung (30) des Beutels in Form eines « W »,
- einen Schritt des Flachlegens (31) des Beutels (9),
- einen Schritt des Schweißens (33) der Seitenflächen des Beutels,
- einen Schritt des Füllens (34), und
- einen Schritt des Schweißens (35) des oberen Teils des Beutels mit flachem Boden (9).

## Claims

1. A device for packaging and dispensing any type of viscous and/or pasty sauce and condiment, **characterized in that** it includes:
- a reusable tube (5), generally of cylindrical shape, having two perfectly similar ends,
- a reusable piston (3) exhibiting the same profile as said tube (5), having its two perfectly similar faces and being positioned inside said tube (5) via one of its ends,
- a sachet (9) with a flat bottom positioned inside said tube (5) via the other end, having two lateral welds (15) and a base (37) having a partially or totally plane surface (37) and an exchange surface (17) having at least one opening (7) for dispensing the product (4), and
- a seal (11) connected to the sachet (9) covering said surface (17) and providing easy opening (25).

2. The device as claimed in claim 1, **characterized in that** the two lateral welds (15) of the sachet with a flat bottom (9) are shaped in the form of a "W", making it possible to obtain a partially or totally flat bottom (37).

3. The device as claimed in claim 1, **characterized in that** the sachet with a flat bottom (9) is constructed from a flexible film.

4. The device as claimed in claim 3, in which the flexible film comes from a reel (27).

5. The device as claimed in claim 1, **characterized in that** the exchange surface (17) is an integral part of the sachet (9) and is situated on the partially or totally flat bottom (37).

6. The device as claimed in claim 5, **characterized in that** said exchange surface (17) has a plurality of flaps (19) forming a minimum of one opening (7) allowing the product (4) to be dispensed.

7. The device as claimed in claim 1, **characterized in that** it comprises a reinforcement (10) capable of adding rigidity to the exchange surface (17) once the unit formed by the tube (5), the piston (3) and the sachet with a flat bottom (9) has been assembled in the dosing gun (1).

8. The device as claimed in claim 1, **characterized in that** the sachet with a flat bottom (9) exhibits two lateral surfaces (12, 12') perfectly matching the interior surface (23) of the tube (5), when the sachet with a flat bottom (9) is subjected to pressure by the piston (3).

9. The device as claimed in claim 1, **characterized in that** the surface (37) has a hot melt coating allowing the seal (11) to be assembled and welded along a welding line (18).

10. The device as claimed in claim 1, **characterized in that** the piston (3) has openings (14).

11. The device as claimed in claim 7, **characterized in that** the reinforcement (10) is assembled onto the body of the dosing gun (1) or onto the bottom of the flat sachet (9) at its base (37).

12. A method of manufacturing the device for packaging and dispensing any type of viscous and/or pasty sauce and condiment according to any one of claims 1 to 11, **characterized in that** it comprises:
- a stage of cutting said openings (7),
- a stage of closing off the exchange surface (17) by its seal (11),
- a stage of forming (30) the sachet in the shape of a "W",
- a stage of flattening (31) the sachet (9),
- a stage of welding (33) the lateral sides of the sachet,
- a stage of filling (34), and
- a stage of welding (35) the upper part of the sachet with a flat bottom (9).
